# EUROPÄISCHE PATENTSCHRIFT

(11) **EP 1 431 641 B1**
(45) Veröffentlichungstag und Bekanntmachung des Hinweises auf die Patenterteilung: **08.08.2007**
(21) Anmeldenummer: 03078806.1
(22) Anmeldetag: 02.12.2003
(51) Int. Cl.: F16L 3/10, F16L 3/12

(54) **Rohrschelle**
Pipe clamp
Collier pour tuyau

(30) Priorität: 18.12.2002 NL 1022191
(43) Veröffentlichungstag der Anmeldung: 23.06.2004
(73) Patentinhaber: J. van Walraven Holding B.V., 3641 RK Mijdrecht (NL)
(72) Erfinder: van Walraven, Jan, 3641 GP Mijdrecht (NL)
(74) Vertreter: Brookhuis, Hendrik Jan Arnold

(56) Entgegenhaltungen:
- EP-A- 0 602 456
- EP-A- 0 908 637
- EP-A- 0 942 182
- DE-A- 3 439 418

## Beschreibung

Die Erfindung betrifft eine Rohrschelle zum Befestigen einer Leitung an einer Wand, Decke oder einer anderen Unterstützung.

Aus EP 0 908 637 ist eine Rohrschelle bekannt, wobei die Spannschraube in einer Federmutter steckt, die scharnierbar auf dem zweiten Flansch des Schellenkörpers abgestützt ist, während der Kopf der Spannschraube hinter die Lippen des ersten Flansches greifen kann. Zum Schließen der Rohrschelle kann die Spannschraube tiefer in die Federmutter gedrückt werden und es ist nicht erforderlich, die Spannschraube zu drehen, so dass Montagezeit eingespart werden kann. Die Federmutter ist aus Federstahl oder Kunststoff hergestellt.

Aus EP 1 022 502 ist eine Rohrschelle bekannt, wobei der Rohrschellenkörper einen ersten Flansch hat mit Lippen, hinter welche der Kopf einer Spannschraube greifen kann. Weiter hat diese bekannte Rohrschelle am anderen freien Ende des Schellenkörpers keinen Flansch, sondern eine scharnierbar mit dem Schellenkörper verbundene Federmutter. Diese bekannte Federmutter ist aus Federstahl hergestellt und ist derart gestaltet, dass beim Spannen mit einem Finger auf das Spannelement gedrückt wird, während gleichzeitig zwei andere Finger auf Bedienungslippen der Federmutter drücken, so dass die Formelemente der Federmutter auseinandergespreizt werden und das Spannelement leicht tiefer in die Federmutter gedrückt werden kann.

Diese bekannten Rohrschellen, insbesondere deren Federmuttern, haben einen schwer zu optimierenden Entwurf, wenn es sich um die Wirkung handelt und es hat sich herausgestellt, dass sie bei der Herstellung kaum zu einem akzeptablen Herstellungspreis herzustellen sind. Vor allem erweist es sich als schwer beim Entwurf von EP 0 908 637 einen geeigneten Kompromiss zu finden zwischen der Kraft, die ausgeübt werden muss, um die Spannschraube weiter in die Federmutter zu drücken einerseits und der schließlich erhaltenen Haltekraft der Federmutter andererseits. Bei der Ausführung gemäß EP 1 022 502 ist jenes Problem kaum vorhanden, aber ist die Herstellung der Federmutter aus Federstahl mit komplexer Gestaltung zu akzeptablen Kosten problematisch.

Die Erfindung beabsichtigt diese Nachteile aufzuheben, und eine Rohrschelle mit verbesserter Federmutter zu schaffen, die eine einfache und schnelle Befestigung der Rohrschelle ermöglicht, zu einem attraktiven Betrag herzustellen ist und verlässlich ist.

Die Erfindung schafft dazu eine Rohrschelle nach Anspruch 1.

Die Federmutter ist vorzugsweise derart gestaltet, dass eine axiale Versetzung des Spannelements gegenüber der Federmutter, wobei der Abstand zwischen dem Kopf des Spannelements und der Federmutter verringert wird, manuell verwirklicht werden kann. Das Lockern des Spannelements kann vorzugsweise nur stattfinden, indem das Spannelement gelöst wird.

Die Federmutter hat einen Kunststoffteil und einen Metallteil, welche Teile jeder eines oder mehrere Formelemente haben, die auf den Schaft des Spannelements angreifen und damit das Spannelement in axialer Richtung gegen ein Ziehen aus der Federmutter sichern.

Vorzugsweise ist der Schaft des Spannelements mit einem Außengewinde oder einem anderen Außenprofil versehen und es sind die Formelemente der Federmutter mit einem auf jenes Profil angreifenden komplementären Profil versehen.

Beispielsweise bilden die Formelemente des Kunststoffteils eines oder mehrere Segmente eines Innengewindes, die vorzugsweise auf mehrere Windungen des Gewindeprofils des Spannelements angreifen.

Der Angriff der Formelemente des Metallteils auf den Schaft des Spannelements sorgt dafür, dass im Falle eines Versagens des Kunststoffteils der Federmutter, zum Beispiel durch dessen Schmelzen bei Brand, das Spannelement sich nicht aus der Federmutter löst, sondern wenigstens einige Zeit hängen bleibt. Dadurch wird unerwünschtes Öffnen der Rohrschelle wenigstens einige Zeit vermieden, was vom Sicherheitstandpunkt her ein Erfordernis ist.

Ebenfalls nimmt der Metallteil der Federmutter einen Teil der gesamten mechanischen Belastung auf die Federmutter auf, wodurch die mechanische Belastung auf den Kunststoffteil der Federmutter geringer ist als wenn kein Metallteil vorhanden wäre. Da die mechanische Belastbarkeit der gängigen Kunststoffe wesentlich niedriger ist als jene von gängigen Metallen, wie zum Beispiel (Feder)stahl, ist dies ein Vorteil bei der Dimensionierung des Kunststoffteils der Federmutter.

Vorzugsweise ist die Federmutter mit dem Rohrschellenkörper verbunden und in einer bevorzugten Ausführungsform gegenüber dem Rohrschellenkörper bewegbar, vorzugsweise scharnierbar.

In einer vorteilhaften Ausführungsform ist der Schellenkörper mit einer federnden Einlage versehen, zum Beispiel aus Gummi, und es liegt ein Befestigungsorgan der Federmutter an die federnde Einlage an. Dadurch ist eine federnde Befestigung der Federmutter an der Rohrschelle verwirklicht.

In einer alternativen Ausführungsform ist das Spannelement mit seinem Kopf scharnierend mit dem Schellenkörper verbunden. Bei dieser Ausführungsform wird die Federmutter vor dem Anbringen einer Leitung in der Rohrschelle auf den Schaft des Spannelements gesteckt.

Die Formelemente des Metallteils der Federmutter sind vorzugsweise als eine oder mehrere federnde Lippen ausgeführt. Vor allem wenn der Metallteil im Wesentlichen plattenförmig ist, führt dies zu dessen einfachen und billigen Herstellung.

Vorzugsweise ist der Metallteil der Federmutter aus Federstahl hergestellt.

Vorzugsweise ist der Metallteil der Federmutter mit dem Kunststoffteil durch eine Klemmverbindung verbunden.

In einer vorteilhaften Ausführung befindet sich der Metallteil der Federmutter an der dem zweiten Flansch zugewandten Seite der Federmutter, so dass bei geschlossener Rohrschelle der Metallteil an jenen zweiten Flansch anliegt. Dadurch stützt der Metallteil der Federmutter sich gegen den zweiten Flansch ab wenn eine Zugkraft auf das Spannelement ausgeübt wird. Dadurch nimmt der zweite Flansch weitaus den größten Teil einer Losreißkraft auf das Spannelement auf. So bleiben die mechanischen Belastungen auf den Kunststoffteil der Federmutter beschränkt.

Vor allem bei einfachen Ausführungsformen, wie jenen, wobei der Metallteil im Wesentlichen plattenförmig ist, kann es vorkommen, dass eine Zugkraft auf das Spannelement zu einer Verformung der Formelemente führt, die das Losreißen des Spannelements nicht verhindert. Um dies zu vermeiden, werden in einer vorteilhaften Ausführungsform die Gestaltung des Metallteils und des zweiten Flanschs so aufeinander abgestimmt, dass die Verformung, die sich der Metallteil der Federmutter unter Einfluss einer Zugkraft im Spannelement unterziehen würde, vom zweiten Flansch unterdrückt wird.

In einer praktisch vorteilhaften Ausführung davon ist im zweiten Flansch eine Durchstecköffnung für das Spannelement vorgesehen, die - an der Stelle wo die Formelemente über den Rand der Durchstecköffnung ragen und in die Richtung jener Formelemente - mit geringem Spiel den Schaft des Spannelements aufnimmt. Bei Zugbelastung auf das Spannelement haben die metallenen Formelemente dann nur eine geringe nicht vom zweiten Flansch unterstützte Länge an ihrem Ende und können dadurch zweckmäßig die ausgeübte Belastung aufnehmen und auf den zweiten Flansch übertragen.

Um die Verformung des Metallteils beim Drücken des Spannelements in die Federmutter zu vereinfachen, ist vorzugsweise im Kunststoffteil hinter den Formelementen des Metallteils ein Raum vorhanden, der eine freie Verformung des Metallteils unter Einfluss des weiteren Drückens des Spannelements in die Federmutter ermöglicht. Dies setzt die Kraft, die für das Drücken des Spannelements in die Federmutter notwendig ist, wesentlich herab.

In einer vorteilhaften Ausführungsform ist beim ersten Ende des Schellenkörpers ein erster Flansch vorhanden, der mit einer Schlitzaussparung versehen ist, die an drei Seiten vom Flansch umschlossen wird und an der vom Schellenkörper abgewandten Seite des Flanschs offen ist. Dadurch entstehen im ersten Flansch zwei Lippen, die den Kopf des Spannelements aufhalten, während sie den Schaft des Spannelements durchlassen. Vorzugsweise sind die freien Enden der Lippen einigermaßen in die vom zweiten Flansch abgewandte Richtung umgebogen. Dadurch wird eine unbeabsichtigte Lockerung der Rohrschelle durch Weggleiten des Spannelements aus der Aussparung im ersten Flansch entgegengewirkt.

Der zweite Flansch hat in dieser vorteilhaften Ausführungsform eine längliche Aussparung zum Durchlassen des Spannelements, zum Beispiel ein Schlitzloch, welches an allen Seiten vom zweiten Flansch umschlossen ist. Die Federmutter ist scharnierend mit dem Schellenkörper verbunden, und befindet sich gleich hinter dem zweiten Flansch, an der Seite, die vom ersten Flansch abgewandt ist. In einer alternativen Ausführungsform ist die Federmutter scharnierend mit dem zweiten festen Flansch verbunden.

In einer vorteilhaften Ausführungsform umfasst der Schellenkörper zwei Schellenteile, die scharnierend miteinander verbunden sind.

In einer vorteilhaften Ausführungsform ist die Rohrschelle wenigstens über ein Teil ihres Innenumfangs mit einer Einlage aus federndem Material verkleidet, zum Beispiel Gummi, zum Dämpfen von Schwingungen und Schall. Gleichzeitig kann diese Einlage so gewählt sein, dass diese für eine federnde Scharnierverbindung zwischen den beiden oben genannten Schellenteilen sorgt, und/oder für eine federnde Befestigung der Federmutter.

Ausführungsbeispiele einer Rohrschelle zum Befestigen einer Leitung an einer Wand, Decke oder einer anderen Unterstützung gemäß der Erfindung werden nachfolgend anhand der beigefügten Zeichnung erläutert.

In der Zeichnung zeigen:
Fig. 1 - eine erste Ausführungsform einer erfindungsgemäßen Rohrschelle in offener Position,
Fig. 2 - diese erste Ausführungsform einer erfindungsgemäßen Rohrschelle in halb offener Position,
Fig. 3 - diese erste Ausführungsform einer erfindungsgemäßen Rohrschelle in geschlossener Position,
Fig. 4 - ein Detail des ersten und zweiten festen Flanschs gemäß der ersten Ausführungsform,
Fig. 5 - ein Detail einer Federmutter gemäß der ersten Ausführungsform,
Fig. 6 - einen Querschnitt einer Federmutter gemäß der ersten Ausführungsform,
Fig. 7 - eine Untenansicht einer Federmutter gemäß der ersten Ausführungsform, und
Fig. 8 - eine zweite Ausführungsform einer erfindungsgemäßen Rohrschelle, in offener Position.

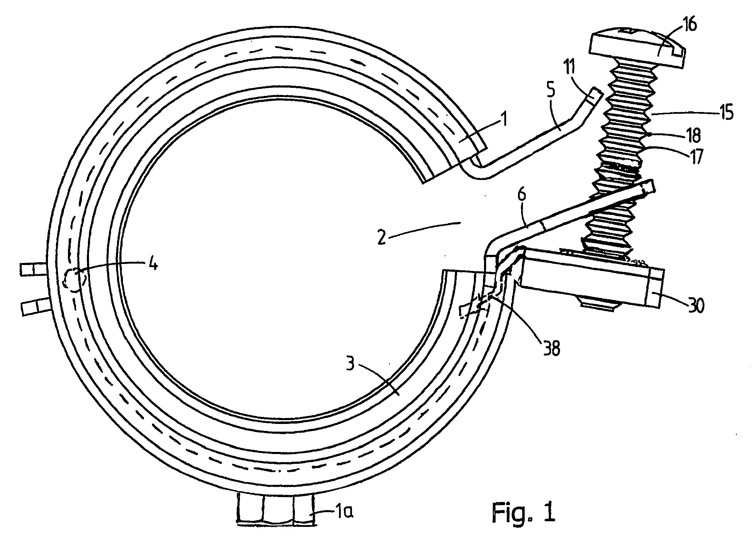

Figur 1 zeigt eine erste Ausführungsform einer Rohrschelle gemäß der Erfindung. Die Rohrschelle umfasst einen Schellenkörper 1, in diesem Beispiel aus Metall, die nach der Befestigung eine Leitung umschließt. Die Öffnung 2, begrenzt durch das erste und das zweite freie Ende des Schellenkörpers 1, sorgt dafür, dass die Rohrschelle um die Leitung angebracht werden kann. Der Schellenkörper 1 ist mit einem Befestigungsorgan 1a versehen, um die Schelle an einer Wand oder anderen Unterstützung befestigen zu können, in der Praxis oft eine Mutter.

Am ersten und zweiten freien Ende des Schellenkörpers sind entsprechend ein erster Flansch 5 und ein zweiter Flansch 6 gestaltet. In der Rohrschelle gemäß diesem Beispiel befindet sich eine federnde Einlage 3, vorzugsweise aus Gummi.

Im ersten Flansch 5 ist eine Aussparung 7 angebracht, die an der vom Schellenkörper 1 abgewandten Seite des Flanschs 5 offen ist. Auf diese Art und Weise entstehen zwei Lippen 8 und 9 im ersten Flansch 5. Im gezeigten Ausführungsbeispiel sind die freien Enden des ersten Flanschs 5 einigermaßen umgebogen, in die vom zweiten Flansch 6 abgewandte Richtung.

Im zweiten Flansch 6 ist eine längliche Aussparung 10 angebracht, die, im Gegensatz zur Aussparung 7 im ersten festen Flansch 5, an allen Seiten vom Flansch 6 umschlossen wird.

Zum Schließen und geschlossen Halten der Rohrschelle umfasst diese ein Spannelement 15, welches Spannelement 15 einen Kopf 16 und einen Schaft 17 hat. Im gezeigten Ausführungsbeispiel ist der Schaft über die gesamte Länge mit einem Außengewindeprofil versehen. Es ist denkbar, dass nur ein Teil des Schafts 17 mit einem Gewindeprofil oder ähnlichem versehen ist.

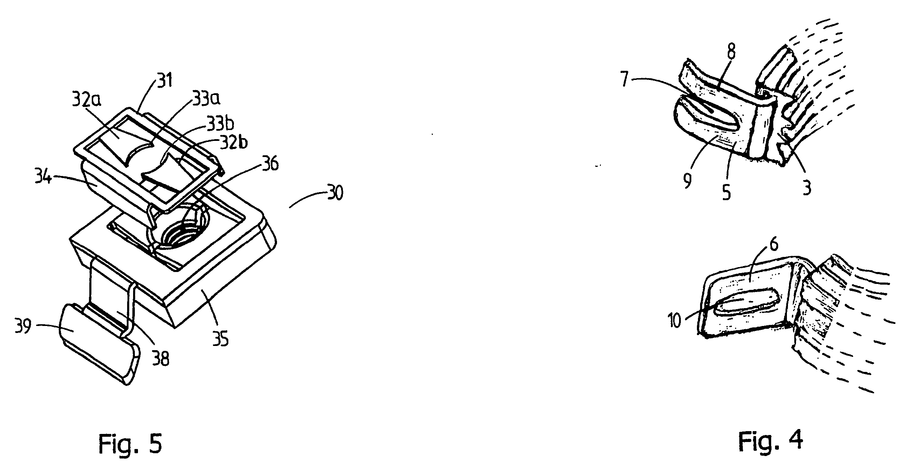

Die Rohrschelle hat eine Federmutter 30 mit einem Metallteil 31 und einem Kunststoffteil 35. Der Metallteil 31, der vorzugsweise aus Federstahl hergestellt ist, ist im Wesentlichen plattenförmig. Wie Fig. 5 zeigt, hat der Metallteil 31 der Federmutter 30 einen Rahmen mit darin zwei einander zugewandten federnden Lippen 32a, 32b. Diese federnden Lippen 32a, 32b sind so gestaltet, dass ihre freien Enden 33a, 33b im Raum zwischen nebeneinanderliegenden Spitzen 18 des Gewindes des Spannelements 15 liegen, wenn die Federmutter 30 auf dem Spannelement 15 angebracht ist.

Wird anschließend eine axiale Kraft auf das Spannelement 15 angebracht, während die Federmutter 30 an ihrem Platz gehalten wird, dann biegen sich die federnden Lippen 32a, 32b. Dadurch nimmt der Abstand zwischen ihren entsprechenden freien Enden 33a, 33b zu. Wenn dieser Abstand ausreichend groß geworden ist, können die Spitzen 18 des Gewindes des Spannelements 15 passieren. Die federnden Lippen 32a, 32b des Spannelements 15 sind derart gestaltet, dass diese Versetzung mit Handkraft verwirklicht werden kann.

Umgebogene Klemmlippen 34 klemmen den Metallteil 31 am Kunststoffteil 35 fest.

Wie die Figur 5, 6 und 7 zeigt, hat der Kunststoffteil 35 der Federmutter 30 ebenfalls einen Rahmen mit darin zwei einander zugewandten federnden Lippen, die jeder an ihrem Ende ein Formelement 36a, 36b haben. Die zwei Formelemente 36a, 36b sind komplementär zur Form des Gewindes auf dem Schaft 17 des Spannelements 15. Versteifungsrippen 37 sorgen für Verstärkung der federnden Lippen des Kunststoffteils 35.

Die Federmutter 30 umfasst in der ersten Ausführungsform ein Befestigungsorgan 38, welches integral mit dem Kunststoffteil 35 der Federmutter 30 ist. Dieses Befestigungsorgan 38 ist durch eine Öffnung im Schellenkörper 1 gesteckt, welche Öffnung dazu speziell in der Nähe des zweiten Flanschs 6 angebracht ist. Der Fuß 39 des Befestigungsorgans 38 befindet sich zwischen dem Schellenkörper 1 und der federnden Einlage 3. Dadurch kann die Federmutter 30 federnd gegenüber dem zweiten fixen Flansch 6 scharnieren.

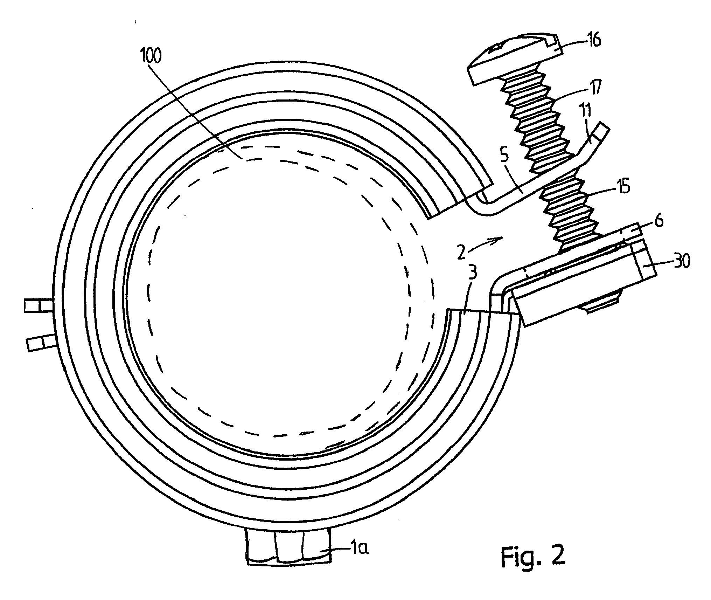

Beim Schließen der Rohrschelle bewirkt der Fuß 39, dass die Federmutter 30 gegenüber dem zweiten Flansch 6 kippt, so dass das Spannelement 15 sich in die Aussparung 7 zwischen den Lippen 8 und 9 bewegt und die Situation der Figur 2 entsteht.

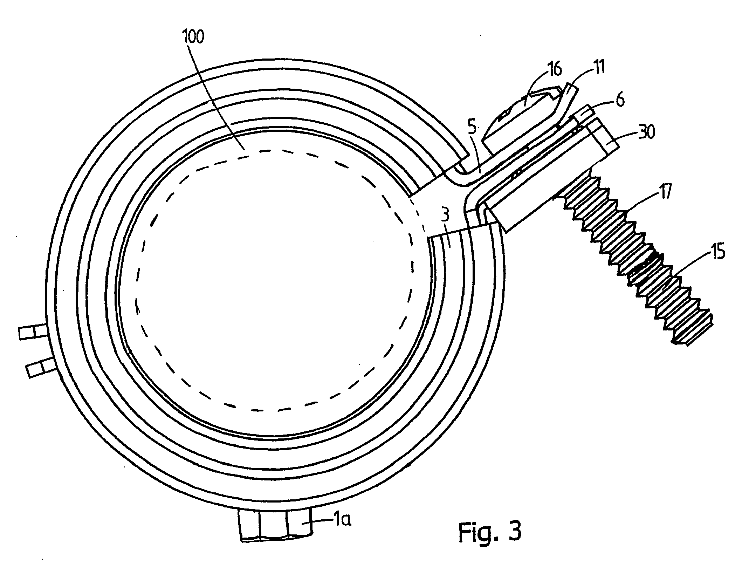

Anschließend wird der Abstand zwischen dem Kopf 16 des Spannelements 15 und der Federmutter 30 verringert. Dies erfolgt vorzugsweise durch Setzen des Daumens auf den Kopf 16, und das Setzen des Zeige- und Mittelfingers derselben Hand auf die Federmutter 30, an beiden Seiten der Öffnung für das Spannelement. Indem man den Daumen und die Finger zueinander bewegt, wird eine axiale Kraft ausgeübt und das Spannelement 15 wird weiter in die Federmutter gedrückt. Schließlich entsteht dabei eine Situation, die mit Fig. 3 vergleichbar ist.

Beim weiter in die Federmutter 30 Drücken des Spannelements 15 werden die federnden Lippen 32a, 32b des Metallteils 31 in die Richtung des Kunststoffteils 35 gedrückt. Um dies einfach erfolgen zu lassen, ist ein freier Raum 50 zwischen dem Metallteil 31 und dem Kunststoffteil 35 vorhanden. Die Formelemente 36 des Kunststoffteils 35 der Federmutter 30 werden ebenfalls auseinandergedrückt. Durch das Ausbiegen der federnden Lippen 32a, 32b wird der Abstand zwischen ihren freien Enden 33a, 33b größer. Der gegenseitige Abstand zwischen den Formelementen 36a und 36b nimmt ebenfalls zu. Sobald diese Abstände groß genug sind, kann das Spannelement 15 passieren.

Das erneute Vergrößern des Abstands zwischen Kopf 16 und Federmutter 30 kann nur durch eine Drehbewegung des Spannelements 15 gegenüber der Federmutter 30 verwirklicht werden, wobei das Gewinde auf dem Schaft 17 des Spannelements 15 in Zusammenarbeit mit den Formelementen 36 des Kunststoffteils 35 und den federnden Lippen 32a, 32b des Metallteils 31 der Federmutter 30 verwendet wird.

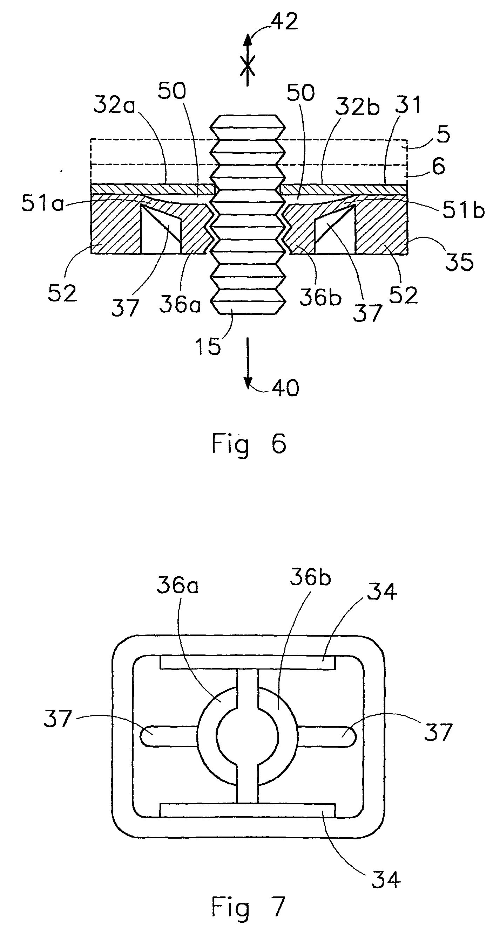

Dem Losreißen des Spannelements 15 aus der Federmutter 30 in Richtung 42 (siehe Fig. 6) unter einer Zugbelastung, vor allem von der unterstützten Leitung, wird durch die Gestaltung der Federmutter 30 und dem Zusammenspiel zwischen der Federmutter 30 und dem zweiten Flansch 6 entgegengewirkt.

Die Formelemente 36a, 36b des Kunststoffteils 35 der Federmutter 30 liegen einigermaßen versunken gegenüber dem Metallteil 31 (siehe Fig. 6). Über schräg nach oben verlaufende Federlippen 51a, 51b sind sie mit dem Körper 52 des Kunststoffteils 35 der Federmutter 30 verbunden. Wenn eine Losreißkraft in die Richtung 42 auf das Spannelement 15 angebracht wird, werden die Formelemente 36a 36b in die Richtung 42 mitgezogen. Durch die schräge Anordnung der Federlippen 51a, 51b wird der gegenseitige Abstand zwischen den Formelementen 36a, 36b verringert. Dadurch legen sie sich straffer an das Spannelement 15 an und wird dem Widerstand gegen das Losreißen des Spannelements 15 aus der Federmutter 30 entgegengewirkt.

Durch die Losreißkraft in die Richtung 42 wird den freien Enden 33a, 33b der federnden Lippen 32a, 32b im Prinzip ebenfalls eine Versetzung in die Richtung 42 auferlegt. Im Gegensatz zu den Formelementen 36a, 36b würden die freien Enden dadurch weiter auseinander liegen. Die Versetzung der freien Enden 33a, 33b der federnden Lippen 32a, 32b wird jedoch durch den zweiten Flansch 6 unterdrückt, an welchem der Metallteil 31 der Federmutter 30 in dieser Ausführungsform anliegt, wenn die Rohrschelle an der Leitung anliegt.

Durch das Unterdrücken der Versetzung der federnden Lippen 32a, 32b wird der größte Teil der Losreißkraft in die Richtung 42 vom Metallteil 31 und dem zweiten Flansch 6 aufgefangen, wodurch der Kunststoffteil 35 der Federmutter 30 weniger schwer belastet wird.

Bei einem eventuellen Versagen des Kunststoffteils 35 der Federmutter 30, zum Beispiel durch Schmelzen im Falle von Brand, wird die Leitung sich nicht sofort aus der Rohrschelle lösen, weil der Metallteil 31 der Federmutter 30 das Spannelement noch festhält.

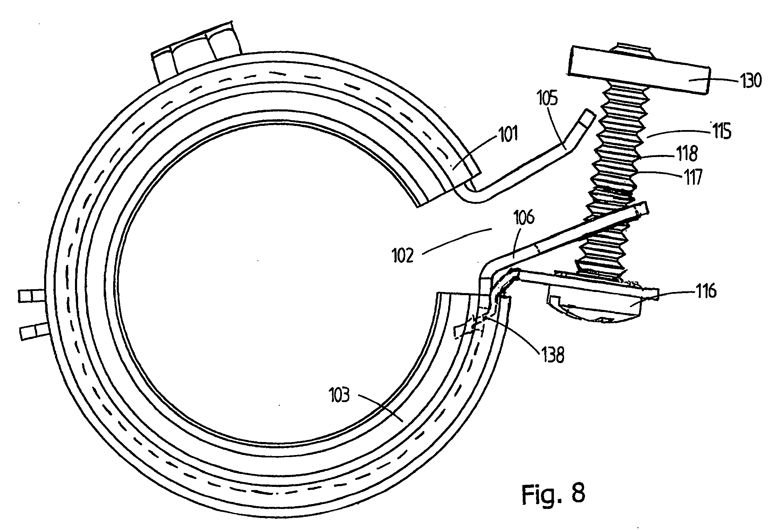

Fig. 8 zeigt eine zweite Ausführungsform der Rohrschelle gemäß der Erfindung. In dieser Ausführungsform sind beide feste Flansche 105, 106 mit einer Aussparung versehen, analog zur Aussparung 7 in Fig. 4.

Das Spannelement 115 ist in dieser Ausführungsform scharnierend mit dem Schellenkörper 103 verbunden. Vorangehend an das Anbringen einer Leitung in der Rohrschelle wird die lose Federmutter 130 ein erstes Stück auf das Spannelement 115 geschoben. Die Federmutter 130 umfasst einen Metallteil 131 und einen Kunststoffteil 135, analog zur Federmutter 30 des ersten Ausführungsbeispiels.

Die Wirkung der Rohrschelle gemäß dem zweiten Ausführungsbeispiel verläuft analog der Rohrschelle gemäß dem ersten Ausführungsbeispiel.

## Patentansprüche

1. Rohrschelle zum Befestigen einer Leitung an einer Wand, Decke oder einer anderen Unterstützung, welche umfasst:
- einen Schellenkörper (1) mit einer Öffnung zum Anbringen der Rohrschelle um die Leitung, welche Öffnung durch ein erstes und ein zweites Ende (5, 6) des Schellenkörpers begrenzt ist,
- ein Spannelement (15), welches einen Kopf (16) und einen Schaft (17) umfasst, welches Spannelement (15) mit seinem Kopf (16) auf das erste Ende (5) des Schellenkörpers (1) angreift,
- eine auf das zweite Ende (6) des Schellenkörpers (1) angreifende Federmutter (30), in welcher Federmutter (30) der Schaft (17) des Spannelements (15) steckt,
- wobei die Federmutter (30) derart ausgeführt ist, dass das Spannelement (15) beim Schließen der Rohrschelle tiefer in die Federmutter (30) gedrückt werden kann,
**dadurch gekennzeichnet, dass**
die Federmutter (30) zusammengesetzt ist aus einem Kunststoffteil und einem Metallteil, wobei der Kunststoffteil (35) und der Metallteil (31) jeder eines oder mehrere Formelemente haben, die auf den Schaft (17) des Spannelements (15) angreifen und derart ausgeführt sind, dass der schaft (17) an den Formelementen vorbei passieren kann während das Spannelement (15) tiefer in die Federmutter (30) gedrückt wird und derart ausgeführt sind, dass das Losreißen des Spannelements aus der Federmutter verhindert wird.

2. Rohrschelle nach Anspruch 1, wobei die Federmutter mit dem zweiten Ende des Schellenkörpers verbunden ist.

3. Rohrschelle nach Anspruch 2, wobei der Kunststoffteil ein integrales Befestigungsorgan hat, das die Federmutter mit dem Schellenkörper verbindet.

4. Rohrschelle nach Anspruch 3, **dadurch gekennzeichnet, dass** das Befestigungsorgan einen Schwenkarm hat, der schwenkbar am Schellenkörper befestigt ist.

5. Rohrschelle nach Anspruch 4, wobei der Schellenkörper mit einer Einlage aus federndem Material verkleidet ist, und wobei der Schwenkarm gegen die Einlage abstützt, so dass die Federmutter entgegen einer Federkraft schwenkbar am Schellenkörper befestigt ist.

6. Rohrschelle nach einem oder mehreren der vorhergehenden Ansprüche, wobei ein Flansch beim zweiten Ende des Schellenkörpers vorgesehen ist.

7. Rohrschelle nach Anspruch 6, wobei die Federmutter an der vom ersten Ende des Schellenkörpers abgewandten Seite des zweiten Flanschs angeordnet ist.

8. Rohrschelle nach Anspruch 7, wobei der Metallteil der Federmutter bei geschlossener Rohrschelle direkt anliegt und gegen den zweiten Flansch abstützt.

9. Rohrschelle nach einem oder mehreren der vorhergehenden Ansprüche, wobei die Formelemente des Metallteils durch die Enden der federnden Lippen des Metallteils gestaltet sind.

10. Rohrschelle nach einem oder mehreren der vorhergehenden Ansprüche, wobei der Schaft des Spannelements mit einem Außengewinde oder einem ähnlichem Profil versehen ist und wobei die Formelemente des Kunststoffteils ein Profil haben, welches komplementär zum Profil des Spannelements ist.

11. Rohrschelle nach einem oder mehreren der vorhergehenden Ansprüche, wobei der Metallteil der Federmutter ein vorzugsweise flaches Plattenteil umfasst, welches die federnden Lippen des Metallteils bildet, wobei der Kunststoffteil in Eindrückrichtung des Spannelements gesehen hinter dem Plattenteil liegt.

12. Rohrschelle nach Anspruch 11, wobei der Kunststoffteil federnde Lippen hat, die an ihren einander zugewandten freien Enden jeder ein Formelement haben.

13. Rohrschelle nach Anspruch 12, wobei die federnden Lippen des Kunststoffteils hinter den federnden Lippen des Metallteils liegen.

14. Rohrschelle nach Anspruch 11 oder 12, wobei der Kunststoffteil und/oder der Metallteil einen Rahmen umfassen, wobei die federnden Lippen gegenüber dem Rahmen nach innen ragen.

15. Rohrschelle nach Anspruch 14, wobei der Metallteil umgebogene Klemmlippen hat, die jeder in einem Schlitz zwischen dem Rahmen des Kunststoffteils und den federnden Lippen des Kunststoffteils stecken.

16. Rohrschelle nach einem oder mehreren der vorhergehenden Ansprüche, wobei der Kunststoffteil der Federmutter einen Raum nahe den Formelementen des Metallteils bildet, welcher Raum das Bewegen der Formelemente des Metallteils beim tiefer in die Federmutter Drücken des Spannelements vereinfacht.

## Claims

1. A pipe clamp for fixing a conduit to a wall, ceiling or other support, comprising:
- a clamp body (1) with an opening for fitting the pipe clamp round the conduit, which opening is bounded by first and second ends (5, 6) of the clamp body,
- a clamping element (15) which has a head (16) and a shank (17), the head (16) of which clamping element (15) engages on the first end (5) of the clamp body (1),
- a spring nut (30) engaging on the second end (6) of the clamp body (1), in which spring nut (30) is inserted the shank (17) of the clamping element (15),
- wherein the spring nut (30) is so formed that the clamping element (15) can be pushed deeper into the spring nut (30) on closing the pipe clamp,
**characterized in that**
the spring nut (30) is composed of a plastics part and a metal part, wherein the plastics part (35) and the metal part (31) each have one or more shaped elements which engage on the shank (17) of the clamping element (15) and are so designed that the shank (17) can move past the shaped elements while the clamping element (15) is pressed deeper into the spring nut (30) and are so designed that the clamping element is prevented from being pulled out of the spring nut.

2. A pipe clamp according to claim 1, wherein the spring nut is connected to the second end of the clamp body.

3. A pipe clamp according to claim 2, wherein the plastics part has an integral fixing member which connects the spring nut to the clamp body.

4. A pipe clamp according to claim 3, **characterized in that** the fixing member has a pivot arm which is fixed pivotally to the clamp body.

5. A pipe clamp according to claim 4, wherein the clamp body is clad with a lining of resilient material and wherein the pivot arm is supported against the lining, so that the spring nut is fixed pivotally on the clamp body against a resilient force.

6. A pipe clamp according to one or more of the preceding claims, wherein a flange is provided at the second end of the clamp body.

7. A pipe clamp according to claim 6, wherein the spring nut is disposed on the side of the second flange facing away from the first end of the clamp body.

8. A pipe clamp according to claim 7, wherein the metal part of the spring nut bears directly on and is supported against the second flange with the clamp body closed.

9. A pipe clamp according to one or more of the preceding claims, wherein the shaped elements of the metal part are formed by the ends of the resilient lips of the metal part.

10. A pipe clamp according to one or more of the preceding claims, wherein the shank of the clamping element is provided with an external thread or a similar profile and wherein the shaped elements of the plastics part have a profile which is complementary to the profile of the clamping element.

11. A pipe clamp according to one or more of the preceding claims, wherein the metal part of the spring nut comprises a preferably flat plate part which forms the resilient lips of the metal part, wherein the plastics part lies behind the plate part as seen in the direction of pressing in the clamping element.

12. A pipe clamp according to claim 11, wherein the plastics part has resilient lips which each have a shaped element at their free ends facing one another.

13. A pipe clamp according to claim 12, wherein the resilient lips of the plastics part lie behind the resilient lips of the metal part.

14. A pipe clamp according to claim 11 or 12, wherein the plastics part and/or the metal part comprise a frame, wherein the resilient lips project inwards relative to the frame.

15. A pipe clamp according to claim 14, wherein the metal part has bent over clip lips which each stick into a slit between the frame of the plastics part and the resilient lips of the plastics part.

16. A pipe clamp according to one or more of the preceding claims, wherein the plastics part of the spring nut forms a space near the shaped elements of the metal part, which space facilitates the movement of the shaped elements of the metal part on pressing the clamping element deeper into the spring nut.

## Revendications

1. Collier pour tuyau, pour la fixation d'une conduite à un mur ou paroi, plafond ou à un autre soutien, comprenant :
- un corps de collier (1) avec une ouverture pour le montage du collier autour de la conduite, l'ouverture étant délimitée par une première et une deuxième extrémité (5, 6) du corps de collier,
- un élément de serrage (15), comprenant une tête (16) et une tige (17), ledit élément de serrage (15) agissant par sa tête (16) sur la première extrémité (5) du corps de collier (1),
- un écrou élastique (30) agissant sur la deuxième extrémité (6) du corps de collier (1), écrou élastique (30) dans lequel s'étend la tige (17) de l'élément de serrage (15),
- l'écrou élastique (30) étant réalisé de manière que l'élément de serrage (15) puisse être pressé dans l'écrou élastique (30) plus profondément lors de la fermeture du collier pour tuyau,
**caractérisé en ce que**
l'écrou élastique (30) est composé d'une partie en matière synthétique et d'une partie métallique, la partie en matière synthétique (35) et la partie métallique (31) ayant chacune un ou plusieurs éléments de forme agissant sur la tige (17) de l'élément de serrage (15) et étant réalisés de manière que la tige (17) puisse passer sur les éléments de forme, tandis que l'élément de serrage (15) est pressé plus profondément dans l'écrou élastique (30) et étant réalisés de manière que l'arrachement de l'élément de serrage hors de l'écrou élastique soit empêché.

2. Collier pour tuyau selon la revendication 1, l'écrou élastique étant relié à la deuxième extrémité du corps de collier.

3. Collier pour tuyau selon la revendication 2, la partie en matière synthétique ayant un organe de fixation monobloc, reliant l'écrou élastique au corps de collier.

4. Collier pour tuyau selon la revendication 3, **caractérisé en ce que** l'organe de fixation est un bras pivotant, fixé à pivotement sur le corps de collier.

5. Collier pour tuyau selon la revendication 4, le corps de collier étant habillé d'un insert en matériau élastique et le bras pivotant étant soutenu contre l'insert, de manière que l'écrou élastique soit fixé à pivotement sur le corps de collier, à l'encontre d'une force élastique.

6. Collier pour tuyau selon l'une ou plusieurs des revendications précédentes, une bride étant prévue à la deuxième extrémité du corps de collier.

7. Collier pour tuyau selon la revendication 6, l'écrou élastique étant disposé sur la face, opposée à la première extrémité du corps de collier, de la deuxième bride.

8. Collier pour tuyau selon la revendication 7, la partie métallique de l'écrou élastique appuyant directement sur et prenant appui contre la deuxième bride lorsque le collier pour tuyau est fermé.

9. Collier pour tuyau selon l'une ou plusieurs des revendications précédentes, les éléments de forme de la partie métallique étant configurés par les extrémités des lèvres élastiques de la partie métallique.

10. Collier pour tuyau selon l'une ou plusieurs des revendications précédentes, la tige de l'élément serreur étant munie d'un filetage extérieur ou d'un profil analogue, et les éléments de forme de la partie en matière synthétique ayant un profil complémentaire du profil de l'élément serreur.

11. Collier pour tuyau selon l'une ou plusieurs des revendications précédentes, la partie métallique de l'écrou élastique comprenant une partie formant plaque, de préférence plate, qui forme les lèvres élastiques de la partie métallique, sachant que la partie en matière synthétique est située derrière la partie formant plaque, en observant dans la direction d'enfoncement de l'élément serreur.

12. Collier pour tuyau selon la revendication 11, la partie en matière synthétique ayant des lèvres élastiques qui, sur leurs extrémités libres, tournées les unes vers les autres, ont chacune un élément de forme.

13. Collier pour tuyau selon la revendication 12, les lèvres élastiques de la partie en matière synthétique étant situées derrière les lèvres élastiques de la partie métallique.

14. Collier pour tuyau selon la revendication 11 ou 12, la partie en matière synthétique et/ou la partie métallique comprenant un cadre, les lèvres élastiques ressortant vers l'intérieur par rapport au cadre.

15. Collier pour tuyau selon la revendication 14, la partie métallique ayant des lèvres de serrage repliées, qui s'enfichent chacune dans une fente, située entre le cadre de la partie en matière synthétique et les lèvres élastiques de la partie en matière synthétique.

16. Collier pour tuyau selon l'une ou plusieurs des revendications précédentes, la partie en matière synthétique de l'écrou élastique formant un espace près des éléments de forme de la partie métallique, ledit espace simplifiant le déplacement des éléments de forme de la partie métallique lorsqu'on presse l'élément de serrage plus profondément à l'intérieur de l'écrou élastique.
